# EUROPÄISCHE PATENTSCHRIFT

(11) **EP 0 592 773 B1**
(45) Veröffentlichungstag und Bekanntmachung des Hinweises auf die Patenterteilung: **29.12.1997**
(21) Anmeldenummer: 93110913.6
(22) Anmeldetag: 18.06.1991
(51) Int. Cl.: A01B 5/14

(54) **Umkehrrotorpflug wie Scheibenkehrpflug und dgl.**
Double-turn plough like reversible disk plough and the like
Charrue double-tour telle que charrue réversible à disques et similaire

(30) Priorität: 20.06.1990 DE 4019612
(43) Veröffentlichungstag der Anmeldung: 20.04.1994
(62) Teilanmeldung aus: 91109950.5
(73) Patentinhaber: Hofmann, Hans, D-89233 Neu-Ulm (DE)
(72) Erfinder: Hofmann, Hans, D-89233 Neu-Ulm (DE)

(56) Entgegenhaltungen:
- EP-A- 0 149 488
- WO-A-89/06897
- CH-A- 433 843
- DE-A- 2 835 317
- GB-A- 1 497 259
- US-A- 4 869 327

## Beschreibung

Die Erfindung betrifft einen Umkehrrotorpflug bestehend aus :
a) einem mit Pflugwerkzeugen versehenen Rotor, der von einer Antriebsquelle aus um seine, mindestens während der Arbeit, schräg zur Fahrtrichtung verlaufende Längsachse antreibbar ist, und
b) einem den Rotor tragenden Rahmen welcher sich mindestens während der Arbeit, mittels mindestens einem Rad auf dem Boden abstützt,
wobei dieser Rahmen aus :
(i) einer ersten Rahmeneinheit, mittels welcher der Umkehrrotorpflug an ein Fahrzeug kuppelbar ist,
(ii) einer zweiten, den Rotor tragenden Rahmeneinheit, die mit der ersten Rahmeneinheit mittles eines Gelenkes verbunden ist, und
(iii) Kraftübertragungsorganen, die die von der Antriebsquelle erhaltenen Antriebskraft zum Rotor übertragen, wobei diese Kraftübertragungsorgane unter anderem ein Antriebsgehäuse aufweisen.

Ein Umkehrrotorpflug dieser Gattung ist aus der CH-A-433 843 bekannt. Dieser Umkehrrotorpflug weist einen Rahmen auf, mittels welches er an einen Schlepper anbaubar ist, sowie einen Rotor, der von der Zapfwelle des Schleppers motorisch angetrieben wird.

Der Rahmen besteht aus einer ersten Einheit, die am Dreipunkt des Schleppers anbaubar ist, und aus einer zweiten Einheit, in welcher der Rotor rotierend gelagert ist und die mit der ersten Rahmeneinheit mittels eines mit parallel zur Fahrtrichtung gerichteten Achse versehenen Gelenkes verbunden ist.

Der Rotor besteht aus einer Welle und auf dieser befestigten Scheiben. Die Welle ist derart in der zweiten Rahmeneinheit gelagert, dass ihre Längsachse sich schräg zur Fahrtrichtung erstreckt.

An dem - in Fahrtrichtung gesehen - vorderen Ende des Rotors weist die zweite Rahmeneinheit ein Antriebsgehäuse auf, das zum Antrieb des Rotors dient. Dieses Antriebsgehäuse weist eine senkrecht zur Längsachse der Welle des Rotors verlaufende Eingangswelle auf, die die Antriebskraft von der Zapfwelle des Schleppers über eine Kardanwelle bekommt. Die Eingangswelle steht mit einer Drehrichtungsänderungsvorrichtung in Antriebsverbindung, mittels welcher die Drehrichtung des Rotors veränderbar ist. Zwischen der Drehrichtungsänderungsvorrichtung und der Welle des Rotors ist endlich noch ein Verzögerungsmechanismus vorgesehen.

Im Bereich des - in Fahrtrichtung gesehen - hinteren Endes des Rotors weist die zweite Rahmeneinheit zwei Furchenräder auf. Jedes Furchenrad besteht aus einem Rad, das, während der Arbeit, auf der Landseite rollt, und einer senkrechten Scheibe, die, beim Rollen des Rades auf der Landseite, etwas in den Erdboden eindringt. Die senkrechte Lage der Furchenräder gegenüber der zweiten Rahmeneinheit ist einstellbar. Jedes Furchenrad dient demzufolge zur Bestimmung der Arbeitstiefe des Rotors und gleichzeitig zur Aufnahme eines gewissen Teils der während der Arbeit auftretenden Seitenkräfte.

Im Betrieb wird der Rotor derart angetrieben, dass an seiner Vorderseite die Scheiben sich in Richtung zum Erdboden bewegen.

An dem Ende des Feldes, wird der Pflug mittels der Dreipunkthebevorrichtung des Schleppers angehoben und die zweite Rahmeneinheit wird samt Rotor und Furchenräder gegenüber der mit der Dreipunkthebevorrichtung des Schleppers verbundenen ersten Rahmeneinheit um die in Fahrtrichtung zeigende Achse des die zweiten mit der ersten Rahmeneinheit verbindenden Gelenkes derart geschwenkt, dass das am vorderen Ende des Rotors vorgesehene Antriebsgehäuse sich während des Verschwenkens im Bereich unter der Achse dieses Gelenkes bewegt.

Dieser bekannte Umkehrrotorpflug weist mehrere Nachteile auf.

Ein erster Nachteil ist darin zu sehen, dass aufgrund beschränkter Aushubhöhe der Dreipunkthebevorrichtung des Schleppers, das die zweite mit der ersten Rahmeneinheit verbindende Gelenk sich im Bereich des Endes des zweiten Rahmens befinden muss, welches sich während der Umkehrphase im Bereich unter der Achse dieses Gelenkes bewegen muss.

Durch diese exzentrischen Anordnung des Gelenkes kann es erforderlich werden, dass eine gewisse Energie entwickelt werden muss um den Pflug von einer Stellung in die andere umzukehren.

Die Verbindung der zweiten mit der ersten Rahmeneinheit mittels des mit in Fahrtrichtung zeigender Achse versehenen Gelenkes ist auch dadurch nachteilig, weil die zweite Rahmeneinheit samt Antriebsgehäuse, in der Seitenansicht, in der gleichen Ebene als die Längsachse des Rotors liegen muss. Die zweite Rahmeneinheit mit dem Antriebsgehäuse und die die Zapfwelle des Schleppers mit der Eingangswelle des Antriebsgehäuses verbindende Kardanwelle liegen demzufloge sehr nah an der Erdbodenoberfläche. Dies kann nicht nur zu Verstopfungsproblemen führen, sondern auch zur Beschädigung dieser Elemente, insbesondere des Antriebsgehäuses und der Kardanwelle.

Aus der US-PS 4,869,327 ist ein Scheibenumkehrpflug bekannt, der hinsichtlich seiner Abmessungen und seines Eigengewichtes als Anhängepflug ausgebildet ist. Der fachwerkartige Pflugrahmen besteht aus je drei Längs- und Querholmen, die durch diagonale Streben verstärkt sind. Unterhalb des Pflugrahmens ist in der Mitte mittels Tragplatten ein Drehlager angeordnet, an dem ein Schwenkrahmen mit den auf einer zentralen drehbaren Welle angeordneten Scheiben in beide Umkehrstellungen durch einen Differentialzylinder veschwenkbar ist. Aussen ist der Schwenkrahmen desweiteren mit Rollen auf einem die Breite des Pflugrahmens einnehmenden an diesem befestigten Tragring abgestützt. Getragen ist der Pflug beim Transport durch zwei mittlere hydraulisch einsetzbare Transporträder. Weitere hydraulisch ausschwenkbare Radpaare vorne und hinten an dem Pflugrahmen dienen als Abstützungen beim Pflügen und zwar läuft davon je ein vorderes wechselweise in der alten (das andere Vorderrad läuft auf der Landseite) und je ein hinteres wechselweise in der neuen Furche (das andere hintere Rad ist angehoben). Ein motorischer Antrieb der Scheiben ist hier nicht vorgesehen.

Der vorliegenden Erfindung liegt die Aufgabe zugrunde die Nachteile des gattungsbildenden Umkehrrotorpfluges zu beseitigen. Diese Aufgabe wird erfindungsgemäss durch folgende Merkmalskombination gelöst:
(i) das Gelenk, welches die zweite Rahmeneinheit mit der ersten Rahmeneinheit verbindet, ist ein Gelenk mit mindestens etwa senkrechter Achse ;
(ii) die Kraftübertragungsorgane weisen ein im Bereich der Frontseite der ersten Rahmeneinheit angeordnetes Lager und einen Wellenstrang auf, welcher die Antriebskraft vom Lager aus in Richtung auf das Antriebsgehäuse weiterleitet und mindestens über ein Teil seiner Länge höher als die zweite Rahmeneinheit verläuft.

Bei dem erfindungsgemässen Umkehrrotorpflug wurde zur Verbindung der erten Rahmeneinheit und der zweiten Rahmeneinheit ein Gelenk mit mindestens etwa senkrechter Achse vorgesehen. Die Umkehrphase wird demzufloge wesentlich erleichtert. Es gibt hier keine Probleme wegen beschränkter Aushubhöhe. Diese Erleichterung erfolgt auch dadurch, dass die Umkehrbewegung in einer etwa horizontalen Ebene durchgeführt wird.

Bei dem erfindungsgemässen Umkehrrotorpflug ist auch vorgesehen, dass die Kraftübertragungsorgane ein im Bereich der Frontseite der ersten Rahmeneinheit angeordnetes Lager und einen Wellenstrag aufweisen, welcher die Antriebskraft vom Lager aus in Richtung auf das Antriebsgehäuse weiterleitet und mindestens über ein Teil seiner Länge höher als die zweite Rahmeneinheit verläuft.

Aufgrund dieser Anordnung sind die Kraftübertragungsorgane weitgehend gegen Beschädigung geschützt. Auch Verstopfungsprobleme können weitgehend vermieden werden.

Weitere Merkmale der Erfindung ergeben sich aus den Unteransprüchen auf die an dieser Stelle ausdrücklich zur Offenbarung hingewiesen wird.

### Zeichnungsbeschreibung

Die Erfindung ist im folgenden anhand einer Schemazeichmung näher erläutert.

Es zeigt:
Figur 1 einen ersten erfindungsgemässen Umkehrrotorpflug in Draufsicht,
Figur 2 den Umkehrrrotorpflug gemäss Figur 1 in Seitenansicht,
Figur 3 die Umkehrstellungen des Pfluges gemäss den Figuren 1 und 2,
Figur 4 einen zweiten erfindungsgemässen Umkehrrotorpflug in Draufsicht,
   und
Figur 5 den Umkehrrotorpflug gemäss Figur 4 in Seitenansicht.

In der Zeichnung ist mit (3) ein aus Längsholmen (3a, 3a') und Querholmen (3b, 3b', 3b'', 3b''') bestehender Pflugrahmen eines Umkehrrotorpfluges, mit (1) ein vorne an diesem vorgesehenes Anbaudreieck zum Anbau desselben an einen durch seine Unterlenker (2) angedeuteten Schlepper und mit (5) ein an einem Drehkranz (4) in Umkehrstellungen verbringbarer aus Längsholmen (5a, 5a') und Querholmen (5b, 5b', 5b'') bestehender - in Frontansicht - nach unten offener U-förmiger Schwenkrahmen mit Pflugwerkzeugen (7) an einer Welle (6). Der Pflugrahmen (3) und das Anbaudreieck (1) bilden eine erste Rahmeneinheit, mittels welcher der Umkehrrotorpflug an den durch seine Unterlenker (2) angedeuteten Schlepper kuppelbar ist, während der Schwenkrahmen (5) eine zweite Rahmeneinheit bildet, die mit der ersten Rahmeneinheit (1-3) mittels des zwischen der ersten und der zweiten Rahmeneinheit vorgesehenen Drehkranzes (4) mit mindestens etwa senkrecht verlaufender Achse drehbar verbunden ist. Wie in den Figuren veranschaulicht, ist der Drehkranz (4) sowohl an den beiden Längsholmen (3a, 3a') des Pflugrahmens (3), als auch an den beiden Längsholmen (5a, 5a') des Schwenkrahmens (5) befestigt. Desweiteren ist der Drehkranz (4) - in Draufsicht gesehen - etwa im Mittelbereich des Schwenkrahmens (5) angeordnet.

Mit (19a, 19b) sind Landstützräder und mit (13a, 13b) Furchenräder bezeichnet. (1c) ist die Oberlenkertraverse, um welche der zum Transport durch die Unterlenker (2) angehobene und zur Arbeit abgesenkte Pflug schwenkt.

Zur Seiteneinstellung des Pfluges um die in Fahrtrichtung verlaufende x-Achse ist die als Welle ausgebildete Anbauschiene (1a) um eine mindestens etwa horizontal und mindestens etwa rechtwinklig zur Fahrtrichtung verlaufende Achse an einer sich nach dem Boden (A) erstreckenden Abkröpfung (3c) der Längsholme (3a, 3a') des Pflugrahmens (3) bzw. Verlängerung des Anbaudreiecks (1) gelagert und an ihren Enden mit sich entgegengesetzt, in einer Ebene erstreckenden Stirnkurbeln (15a, 15b) versehen, an deren, in ihrer Länge verstellbaren Armen (16a, 16b), ihre mit den Unterlenkern (2) verbundenen Steckzapfen (1b) angeordnet sind.

Unten an einer an dem Querholm (3b''') des Pflugrahmens (3) errichteten, mit der geometrischen Achse des Drehkranzes (3) zentrierten Achse (11) ist ein Doppelschwinghebel (21), der zwei Lastarmen (21a und 21b) aufweist, gelagert. Einer mit einem an seinem Ende an einer Kolbenstange (29) eines Linearmotors (28) (z.B. einen Arbeitszylinder) angelenkte Kraftarm (22a) eines ebenfalls an einem oberen Stufensitz der Achse (11) gelagerten Winkelhebels (22) ist, durch einen Stift (10) bzw. Mitnehmer mit dem Lastarm (21a) verbunden.

Etwa in der Mitte zwischen der Anbauschiene (1a) und dem Doppelschwinghebel (21) ist an den Längsholmen (3a, 3a') des Pflugrahmens (3) eine Welle (17) drehbar gelagert, an deren beiden Enden sich in einer Ebene entgegengesetzt erstreckende Stirnkurbelarme (18) angebracht sind, die ebenso wie die Stirnkurbeln (15a, 15b) in der Transportstellung des Pfluges horizontal liegen.

An den Lastarmen (21a, 21b) des Doppelschwinghebels (21) sind Ketten (24a, 24b) angelenkt, welche an der Welle (17), diese zum einen (24a) von oben und zum anderen (24b) von unten im Sinne eines Doppelzuges am äusseren Teilumfang umgreifend, angebracht sind. An der der Aufhängung der Ketten (24a, 24b) an der Welle (17) etwa 180° am Umfang nach innen versetzten Seite sind desweiteren Ketten (27a und 27b) angebracht, welche an der Anbauschiene (1a) im Sinne des oben beschriebenen Doppelzuges aufgehängt sind. Zur besseren Führung der Ketten (24a, 24b, 27a, 27b) sind an den Querholmen (3a, 3a') des Pflugrahmens (3) nahe der Anbauschiene (1a) und der Welle (17) Stangen (25) mit die Ketten (24a, 24b, 27a, 27b) aufnehmenden drehbar angeordneten Büchsen (26) vorgesehen. Spannschlösser (31) dienen zum Spannen der Ketten (24a, 24b, 27a, 27b).

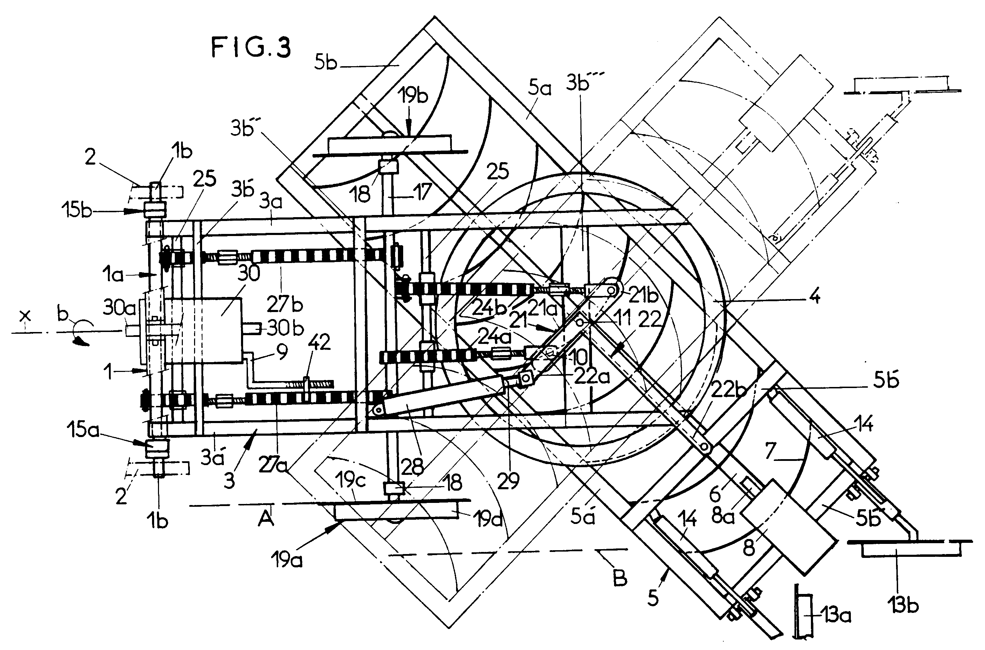

Wird die Kolbenstange (29) des Linearmotors (28) eingefahren und dadurch der Kraftarm (22a) im Sinne eines Zuges an der Kette (24b) ausgelenkt, wird das Landstützrad (19a) in Stützstellung auf der Landseite verbracht und die Stirnkurbel (15b) in Richtung zum Boden (A) hin geschwenkt und die Stirnkurbel (15a) umgekehrt nach oben, sodass sich der Pflug um die in Figur 3 angedeutete x-Achse nach der durch den Pfeil (b) - Figur 3 - gekennzeichneten Seite neigt. Gleichzeitig wird durch den Lastarm (22b) des Winkelhebels (22), der an dem Querholm (5b') des Schwenkrahmens (5) angelenkt ist, letzterer in die in Figur 3 mit Vollinien ersichtliche Arbeitsstellung in welcher die Längsachse des durch die Welle (6) und die Pflugwerkzeuge (7) gebildeten Rotors schräg zur Fahrrichtung verläuft, verschwenkt. Gleichzeitig wird auch durch den Linearmotor (14) das entsprechende Furchenrad (13b) um eine etwa horizontal verlaufende Achse zum Boden (A) geschwenkt. Die andere Arbeitstellung ist in Figur 3 strichpunktiert dargestellt.

Wie zu sehen, bestehen die Landstützräder (19a, 19b) zur Aufnahme der starken Seitenkräfte aus Führungsscheiben (19c) und Stützreifen (19d).

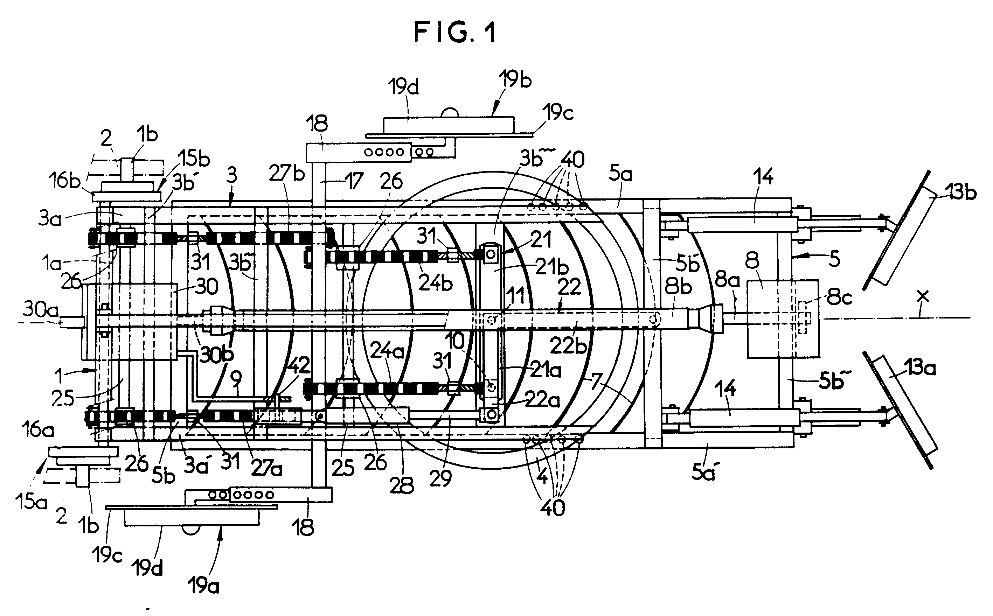

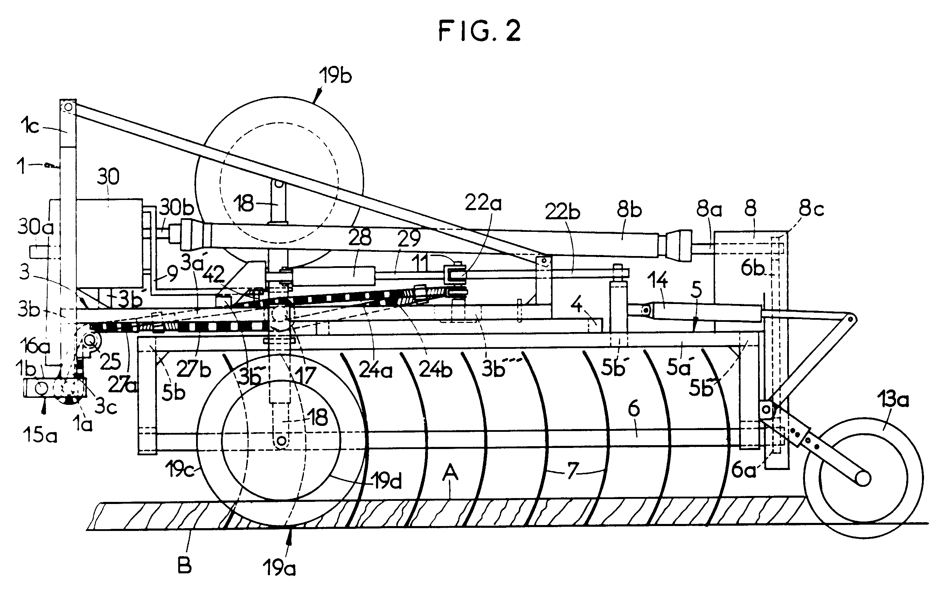

Die auf der Welle (6) angeordneten, hier als Scheiben ausgebildeten Pflugwerkzeugen (7) sind angetrieben. Hierzu ist an dem Querholm (3b'), d.h. im Bereich der Frontseite des Pflugrahmens (3), wo sich das Anbaudreieck (1) erstreckt, ein Wendegetriebe (30) angeordnet, dessen Lage gegenüber dem Pflugrahmen (3) und dem Anbaudreieck (1), während des Schwenkens des Schwenkrahmens (5) und des Rotors (6-7), deshalb konstant bleibt, und welches ebenfalls als Zwischenlagerung dient. Das Wendegetriebe (30) weist einen Anschlusstutzen (30a) zur Verbindung mit der als Antriebsquelle dienenden Schlepperzapfwelle auf, während an dessem Anschlusstutzten (30b) - wie in Figur 1, 2, 4 und 5 veranschaulicht - eine diesen mit einem Anschlusstutzen (8a) eines hinten an dem Schwenkrahmen (5) angeordneten Getriebes (8) verbindende Gelenkwelle (8b) angeschlossen ist. Aus diesen Figuren ist ebenfalls zu entnehmen, dass die einen Wellenstrang bildende Gelenkwelle (8b) höher als und oberhalb des Schwenkrahmens (5) verläuft. Ein Antriebsstirnrad (8c) des Getriebes (8) bildet mit einem mit dem hinteren Ende der Welle (6) gekuppelten Antriebsstirnrad (6a) einen Kettenzug (6b). Das Wendegetriebe (30) wird bei dem Umkehr des Pfluges durch ein Schaltgestänge (9), welches durch einen Mitnehmer (42) mit der Kette (27a) verbunden ist, umgeschaltet, wobei die der Arbeitsstellung des Schwenkrahmens (5) und des von diesem getragenen Rotors (6-7) entsprechenden Drehrichtung des Rotors eingestellt wird.

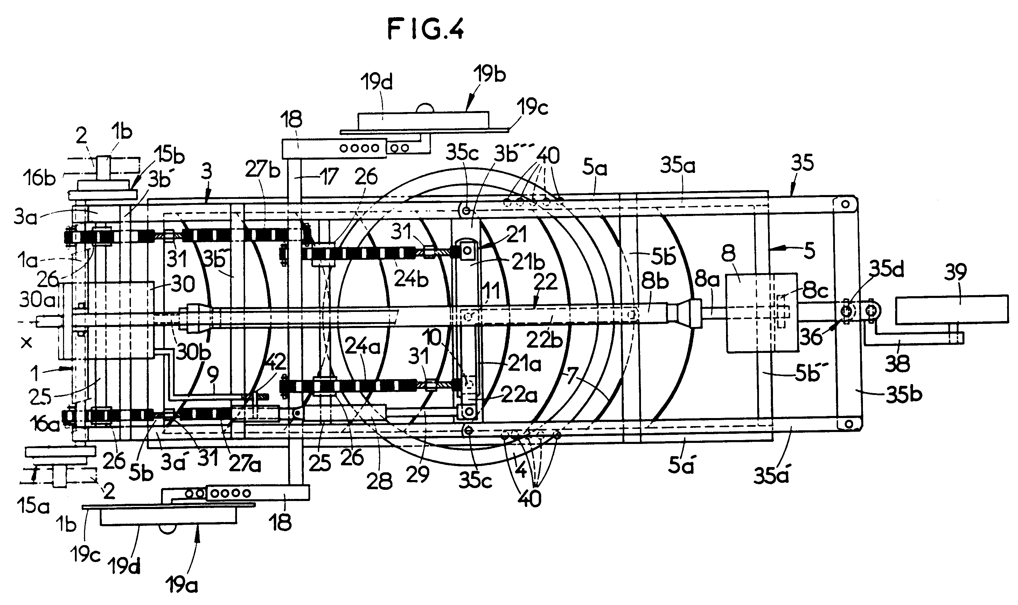

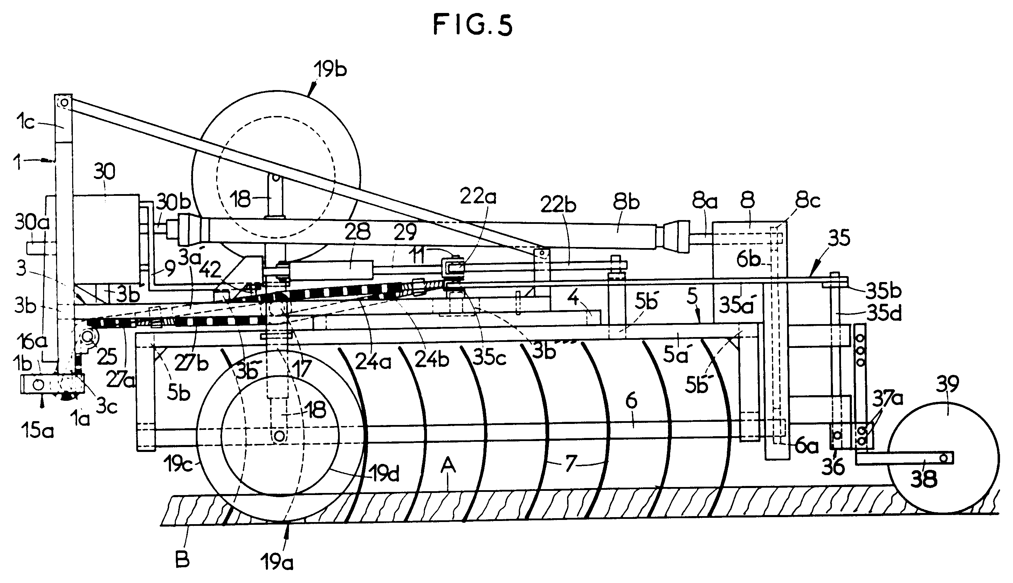

In den Figuren 4 und 5 ist eine andere Ausführung eines selbsttätig mit der Verschwenkung des Schwenkrahmens (5) sich einstellendes Furchenrad (39) gezeigt. Dieses ist mit seinem Tragarm (38) an einem Gelenk (36) (mit mindestens etwa senkrechter Achse) des Schwenkrahmens (5) gelagert. Löcher (37a) dienen zur Tiefeneinstellung desselben. Der Tragarm (38) ist, wie zu sehen, mit einer Welle (35d) einer Parallelschwinge (35) verbunden, deren parallel an den Längsholmen (3a, 3a') des Pflugrahmens (3) an Drehgelenken (35c) angelenkte Stangen (35a, 35a'), andererseits gelenkig mit einer die Welle (35d) betätigenden Querstange (35b) verbunden sind. Wie in Figur 4 veranschaulicht, ist sowohl die geometrische Achse des Gelenkes (36) als auch die Symmetrieachse des Furchenrades (39) in der die Längsachse der Welle (6) enthaltenen Vertikalebene enthalten.

In den Figuren 1 und 4 wird der Pflug in seiner Transportstellung gezeigt in welcher der Schwenkrahmen (5) und der von diesem getragene Rotor (6-7) sich in Transportrichtung erstrecken.

Figuren 4 und 5 zeigen eine Ausführung in welcher das Furchenrad (39), während des Transportes, als Transportrad, auf welchem sich der Pflug abstützt, dienen kann. Hierzu kann dann z.B. der Oberlenker des Schleppers abgenommen werden.

Der erfindungsgemässe Umkehrrotorpflug funktioniert wie folgt : Bei dem Pflug in Figur 3 ist der Schwenkrahmen (5) mit Vollinien in einer Arbeitsstellung und strichpunktiert in der Arbeitsstellung zuvor angedeutet. In der Wechselstellung wurde der Pflug durch die Unterlenker (2), sich um den Oberlenker (1c) schwenkend, ausgehoben. Dabei wird fast gleichzeitig der Linearmotor (28) betätigt, welcher über den Lastarm (22b) des Winkelhebels (22) den Schwenkrahmen (5) um 90° aus der strichpunktierten Stellung nach der anderen Seite verschwenkt, wobei die damit verbundene Doppelschwinge (21) über die Ketten (24b und 27b) gleichzeitig die Landstützräder (19a, 19b) sowie die Stirnkurbeln (15a, 15b) ebenfalls in die Umkehrstellung verbringen, wobei sich der Pflug durch die Verdrehung der Steckzapfen (1b) in die durch den Pfeil (b) gekennzeichnete Richtung entgegen der Neigung des mit einem Hinterrad in der Furche bewegten Schleppers um die x-Achse mit den Pflugwerkzeugen parallel zum Boden (A) hin neigt und das Landstützrad (19a) auf der Landseite zum Einsatz kommt und das Furchenrad (13b) in der durch das letzte Pflugwerkzeug (7) gezogenen Furche rollt.

Die Länge der Kraft- und Lastarme des Winkelhebels (22), des Doppelschwinghebels (21) und der Stangen (35a, 35a') sowie der Durchmesser der Wellen (1a und 17) sind dabei in einfacher Weise so aufeinander abzustimmen, dass sich die dabei bewegten Pflugteile in ihrem Bewegungsablauf nicht behindern und gleichzeitig einsatzbereit sind. Dieses ermöglicht in vorteilhafter Weise auch eine kurze Baulänge selbst von eine grössere Anzahl Pflugwerkzeuge aufweisenden Pflügen.

Die mit Löchern (40) angedeutete Verschraubung des Drehkranzes (4) dienen zur Verschiebung des Schwenkrahmens (5) an den Längsholmen (3a, 3a') des Pflugrahmens (3), womit eine Anpassung an verschiedene Schlepperbreiten in besonders einfacher Weise möglich ist.

Die Ketten (24a, 24b, 27a, 27b) sind natürlich auch durch gleichwirkende Getriebeglieder wie z.B. durch Gestänge ersetzbar.

Bei den gezeigten Ausführungsbeispielen ist der die Antriebskraft vom Wendegetriebe (30) zum Getriebe (8) weiterleitende Wellenstrang durch eine einzige Gelenkwelle (8b) gebildet. Es ist jedoch ohne weiteres möglich, dass in anderen Ausführungsformen mehrere Wellen verwendet werden können.

Die Erfindung ist auch bei Aufsattelpflügen, bzw. gezogenen Pflügen verwendbar.

## Patentansprüche

1. Umkehrrotorpflug bestehend aus :
a) einem mit Pflugwerkzeugen (7) versehenen Rotor (6-7), der von einer Antriebsquelle aus um seine, mindestens während der Arbeit, schräg zur Fahrtrichtung verlaufende Längsachse antreibbar ist, und
b) einem den Rotor (6-7) tragenden Rahmen (1-3-4-5), welcher sich mindestens während der Arbeit mittels mindestens einem Rad (13a, 13b, 19a, 19b, 39) auf dem Boden abstützt,
wobei dieser Rahmen (1-3-4-5) aus :
(i) einer ersten Rahmeneinheit (1-3), mittels welcher der Umkehrrotorpflug an ein Fahrzeug kuppelbar ist,
(ii) einer zweiten, den Rotor (6-7) tragenden Rahmeneinheit (5), die mit der ersten Rahmeneinheit (1-3) mittels eines Gelenkes (4) verbunden ist, und
(iii) Kraftübertragungsorganen, die die von der Antriebsquelle erhaltenen Antriebskraft zum Rotor (6-7) übertragen, wobei diese Kraftübertragungsorgane unter anderem ein Antriebsgehäuse (8) aufweisen,
besteht,
dadurch gekennzeichnet, dass
(i) das Gelenk (4), welches die zweite Rahmeneinheit (5) mit der ersten Rahmeneinheit (1-3) verbindet, ein Gelenk mit mindestens etwa senkrechter Achse ist ;
(ii) die Kraftübertragungsorgane ein im Bereich der Frontseite der ersten Rahmeneinheit (1-3) angeordnetes Lager (30-30a-30b) und einen Wellenstrang (8b) aufweisen, welcher die Antriebskraft vom Lager (30-30a-30b) aus in Richtung auf das Antriebsgehäuse (8) weiterleitet und mindestens über ein Teil seiner Länge höher als die zweite Rahmeneinheit (5) verläuft.

2. Umkehrrotorpflug nach Anspruch 1, dadurch gekennzeichnet, dass die Kraftübertragungsorgane (30-30a-30b-8-8a-8b-8c-6a-6b) ein mit der ersten Rahmeneinheit (1-3) verbundenes Antriebsgehäuse (30-30a-30b) aufweisen.

3. Umkehrrotorpflug nach Anspruch 2, dadurch gekennzeichnet, dass das mit der ersten Rahmeneinheit (1-3) verbundene Antriebsgehäuse (30-30a-30b) das im Bereich der Frontseite der ersten Rahmeneinheit (1-3) angeordnete Lager (30-30a-30b) bildet.

4. Umkehrrotorpflug nach mindestens einem der Ansprüche 1 bis 3, dadurch gekennzeichnet, dass der Wellenstrang (8b) mindestens über ein Teil seiner Länge oberhalb der zweiten Rahmeneinheit (5) verläuft.

5. Umkehrrotorpflug nach mindestens einem der Ansprüche 1 bis 4, dadurch gekennzeichnet, dass die Kraftübertragungsorgane, bezogen auf die Fahrtrichtung, am hinteren Ende des Rotors (6-7) gekuppelt sind.

6. Umkehrrotorpflug nach mindestens einem der Ansprüche 1 bis 5, dadurch gekennzeichnet, dass die Kraftübertragungsorgane (30-30a-30b-8-8a-8b-8c-6a-6b) Drehrichtungänderungsorgane (30) aufweisen, mittels welcher die Drehrichtung des Rotors (6-7) veränderbar ist.

7. Umkehrrotorpflug nach Anspruch 6 und mindestens einem der Ansprüche 2 oder 3, dadurch gekennzeichnet, dass die Drehrichtungänderungsorgane (30) in dem mit der ersten Rahmeneinheit (1-3) verbundenen Antriebsgehäuse (30-30a-30b) vorgesehen sind.

8. Umkehrrotorpflug nach Anspruch 6 oder 7, dadurch gekennzeichnet, dass die Drehrichtungänderungsorgane (30) während des Schwenkens der zweiten Rahmeneinheit (5) gegenüber der ersten Rahmeneinheit (1-3) mittels eines Schaltgestänges (9) betätigbar sind.

9. Umkehrrotorpflug nach mindestens einem der Ansprüche 1 bis 8, dadurch gekennzeichnet, dass die zweite Rahmeneinheit, in der Frontansicht, die Form eines nach unten offenes U aufweist.

10. Umkehrrotorpflug nach mindestens einem der Ansprüche 1 bis 9, dadurch gekennzeichnet, dass das die zweite Rahmeneinheit (5) und der ersten Rahmeneinheit (1-3) verbindende Gelenk (4) sich, in der Draufsicht, etwa im Mittelbereich der zweiten Rahmeneinheit (5) befindet.

11. Umkehrrotorpflug nach mindestens einem der Ansprüche 1 bis 10, dadurch gekennzeichnet, dass das die zweite Rahmeneinheit (5) mit der ersten Rahmeneinheit (1-3) verbindende Gelenk durch einen Drehkranz (4) gebildet ist, welcher zwischen der ersten (1-3) und der zweiten Rahmeneinheit (5) vorgesehen ist.

12. Umkehrrotorpflug nach Anspruch 11, dadurch gekennzeichnet, dass wenigstens die erste Rahmeneinheit (1-3) und ggf. die zweite Rahmeneinheit (5) mindestens im Bereich des Drehkranzes (4) zwei Längsholmen (3a, 3a') aufweist, an welchen der Drehkranz (4) beidseitig befestigt ist.

13. Umkehrrotorpflug nach mindestens einem der Ansprüche 1 bis 12, dadurch gekennzeichnet, dass Betätigungsorgane (22, 22a, 22b, 28, 29) vorgesehen sind, welche zum Schwenken der zweiten Rahmeneinheit (5) gegenüber der ersten Rahmeneinheit (1-3) um die Achse des Gelenkes (4) dienen.

14. Umkehrrotorpflug nach Anspruch 13, dadurch gekennzeichnet, dass die Betätigungsorgane einen Arbeitszylinder (28) aufweisen, welcher einerseits mit der ersten Rahmeneinheit (1-3) und andererseits mit der zweiten Rahmeneinheit (5) verbunden ist.

15. Umkehrrotorpflug nach mindestens einem der Ansprüche 1 bis 14, dadurch gekennzeichnet, dass das Rad (die Räder) (39) mittels welches (welcher) sich der Rahmen (1-3-4-5) mindestens während der Arbeit auf dem Boden abstützt, mit dem Rahmen (1-3-4-5) mittels eines Gelenkes (36) mit mindestens etwa senkrechter Achse verbunden ist (sind), und dass Betätigungsorgane (35-35a-35b-35c) vorgesehen sind, welche zum Schwenken des Rades (der Räder) (39) um die Achse des Gelenkes (36) dienen.

16. Umkehrrotorpflug nach Anspruch 15, dadurch gekennzeichnet, dass die Betätigungsorgane (35-35a-35b-35c) derart vorgesehen sind, dass das Schwenken der Rades (der Räder) (39) während des Schwenkens der zweiten Rahmeneinheit (5) gegenüber der ersten Rahmeneinheit (1-3) erfolgt.

17. Umkehrrotorpflug nach mindestens einem der Ansprüche 1 bis 16, dadurch gekennzeichnet, dass das Rad (die Räder) (13a, 13b, 19a, 19b) mittels welches (welcher) sich der Rahmen (1-3-4-5) mindestens während der Arbeit auf dem Boden abstützt, mit dem Rahmen (1-3-4-5) mittels eines Gelenkes mit mindestens etwa horizontaler Achse verbunden ist (sind), und dass dieses Rad (diese Räder) (13a-13b-19a-19b) mittels Betätigungsorgane (14-21-21a-21b-24a-24b-26) um die Achse des Gelenkes verschwenkbar ist (sind).

18. Umkehrrotorpflug nach Anspruch 15, 16 oder 17, dadurch gekennzeichnet, dass dieses Rad (diese Räder) (13a-13b-39) mit der zweiten Rahmeneinheit (5) verbunden ist (sind).

19. Umkehrrotorpflug nach Anspruch 17, dadurch gekennzeichnet, dass dieses Rad (diese Räder) (19a- 19b) mit der ersten Rahmeneinheit (1-3) verbunden ist (sind).

20. Umkehrrotorpflug nach mindestens einem der Ansprüche 1 bis 19, dadurch gekennzeichnet, dass seitenkräfteaufnehmende Organe (19a-19b-19c-19d) vorgesehen sind, welche mit dem Rahmen (1-3-4-5) mittels eines Gelenkes (17) verbunden sind und dass Betätigungsorgane (21-21a-21b-24a-24b-26) vorgesehen sind, welche zum Schwenken der Seitenkräfte-aufnehmenden Organen (19a-19b-19c-19d) um die Achse des Gelenkes (17) dienen.

21. Umkehrrotorpflug nach Anspruch 20, dadurch gekennzeichnet, dass die Betätigungsorgane (21-21a-21b-24a-24b-26) derart vorgesehen sind, dass das Schwenken der seitenkräfte-aufnehmenden Organen (19a-19b-19c-19d) während des Schwenkens der zweiten Rahmeneinheit (5) gegenüber der ersten Rahmeneinheit (1-3) erfolgt.

22. Umkehrrotorpflug nach mindestens einem der Ansprüche 1 bis 21, dadurch gekennzeichnet, dass die zweite Rahmeneinheit (5) und der von dieser zweiten Rahmeneinheit (5) getragene Rotor (6-7) sich, in Transportstellung, mindestens etwa in Transportrichtung erstrecken.

23. Umkehrrotorpflug nach Anspruch 22, dadurch gekennzeichnet, dass ein Transportrad vorgesehen ist.

24. Umkehrrotorpflug nach mindestens einem der Ansprüche 1 bis 23, dadurch gekennzeichnet, dass an der Frontseite der ersten Rahmeneinheit (1-3), Kurbeln (15a, 15b) vorgesehen sind, welche je mit einem Steckzapfen (1b) für die Unterlenker (2) des Fahrzeuges versehen sind und mit der ersten Rahmeneinheit (1-3) mittels eines mit horizontaler, rechtwinklig zur Fahrtrichtung verlaufenden Achse aufweisenden Gelenkes zur Orientierung des Pfluges um die in Fahrtrichtung verlaufende X-Achse verbunden sind.

## Claims

1. Reversible rotary plough comprising:
a) a rotor (6-7) which is provided with plough tools (7) and can be driven, from a driving source, around its longitudinal axis which, at least during operation, extends transversely to the direction of travel, and
b) a frame (1-3-4-5) which bears the rotor (6-7) and, at least during operation, rests on the ground by means of at least one wheel (13a, 13b, 19a, 19b, 39),
said frame (1-3-4-5) comprising:
(i) a first frame unit (1-3) by means of which the reversible rotary plough can be coupled to a vehicle,
(ii) a second frame unit (5) which bears the rotor (6-7) and is connected to the first frame unit (1-3) by means of an articulation (4), and
(iii) transmission elements which transmit to the rotor (6-7) the driving force obtained from the driving source, these transmission elements having, inter alia, a drive housing (8),
***characterized in*** that
(i) the articulation (4) which connects the second frame unit (5) to the first frame unit (1-3) is an articulation with an at least approximately vertical axis;
(ii) the transmission elements have a bearing (30-30a-30b), which is arranged in the region of the front side of the first frame unit (1-3), and a shalling arrangement (8b), which transmits the driving force from the bearing (30-30a-30b) in the direction of the drive housing (8) and, at least over part of its length, extends at a higher level than the second frame unit (5).

2. Reversible rotary plough according to Claim 1, ***characterized in*** that the transmission elements (30-30a-30b-8-8a-8b-8c-6a-6b) have a drive housing (30-30a-30b) which is connected to the first frame unit (1-3).

3. Reversible rotary plough according to Claim 2, ***characterized in*** that the drive housing (30-30a-30b) which is connected to the first frame unit (1-3) forms the bearing (30-30a-30b) which is arranged in the region of the front side of the first frame unit (1-3).

4. Reversible rotary plough according to at least one of Claims 1 to 3, ***characterized in*** that, at least over part of its length, the shafting arrangement (8b) extends above the second frame unit (5).

5. Reversible rotary plough according to at least one of Claims 1 to 4, ***characterized in*** that the transmission elements are coupled to the rearmost end of the rotor (6-7) with respect to the direction of travel.

6. Reversible rotary plough according to at least one of Claims 1 to 5, ***characterized in*** that the transmission elements (30-30a-30b-8-8a-8b-8c-6a-6b) have elements (30) which can change the direction of rotation of the rotor (6-7).

7. Reversible rotary plough according to Claim 6 and at least one of Claims 2 or 3, ***characterized in*** that the direction-changing elements (30) are provided in the drive housing (30-30a-30b) which is connected to the first frame unit (1-3).

8. Reversible rotary plough according to Claim 6 or 7, ***characterized in*** that the direction-changing elements (30) can be actuated by means of a gearshift linkage (9) during pivoting of the second frame unit (5) with respect to the first frame unit (1-3).

9. Reversible rotary plough according to at least one of Claims 1 to 8, ***characterized in*** that, in front view, the second frame unit has the form of a downwardly open U.

10. Reversible rotary plough according to at least one of Claims 1 to 9, ***characterized in*** that, in plan view, the articulation (4) which connects the second frame unit (5) and the first frame unit (1-3) is located approximately in the central region of the second frame unit (5).

11. Reversible rotary plough according to at least one of Claims 1 to 10, ***characterized in*** that the articulation which connects the second frame unit (5) to the first frame unit (1-3) is formed by a turntable (4) which is provided between the first frame unit (1-3) and the second frame unit (5).

12. Reversible rotary plough according to Claim 11, ***characterized in*** that, at least in the region of the turntable (4), at least the first frame unit (1-3), and if appropriate the second frame unit (5), has/have two longitudinal members (3a, 3a') to which the turntable (4) is fastened on both sides.

13. Reversible rotary plough according to at least one of Claims 1 to 12, ***characterized in*** that there are provided actuating elements (22, 22a, 22b, 28, 29) which serve to pivot the second frame unit (5) with respect to the first frame unit (1-3) around the axis of the articulation (4).

14. Reversible rotary plough according to Claim 13, ***characterized in*** that the actuating elements have a working cylinder (28) which is connected, on the one hand, to the first frame unit (1-3) and, on the other hand, to the second frame unit (5).

15. Reversible rotary plough according to at least one of Claims 1 to 14, ***characterized in*** that the wheel (the wheels) (39) by means of which, at least during operation, the frame (1-3-4-5) rests on the ground is (are) connected to the frame (1-3-4-5) by means of an articulation (36) with an at least approximately vertical axis, and in that there are provided actuating elements (35-35a-35b-35c) which serve to pivot the wheel (the wheels) (39) around the axis of the articulation (36).

16. Reversible rotary plough according to Claim 15, ***characterized in*** that the actuating elements (35-35a-35b-35c) are provided such that pivoting of the wheel (of the wheels) (39) takes place during pivoting of the second frame unit (5) with respect to the first frame unit (1-3).

17. Reversible rotary plough according to at least one of Claims 1 to 16, ***characterized in*** that the wheel (the wheels) (13a, 13b, 19a, 19b) by means of which, at least during operation, the frame (1-3-4-5) rests on the ground is (are) connected to the frame (1-3-4-5) by means of an articulation with an at least approximately horizontal axis, and in that this wheel (these wheels) (13a-13b-19a-19b) can be pivoted around the axis of the articulation by means of actuating elements (14-21-21a-21b-24a-24b-26).

18. Reversible rotary plough according to Claim 15, 16 or 17, ***characterized in*** that this wheel (these wheels) (13a-13b-39) is (are) connected to the second frame unit (5).

19. Reversible rotary plough according to Claim 17, ***characterized in*** that this wheel (these wheels) (19a-19b) is (are) connected to the first frame unit (1-3).

20. Reversible rotary plough according to at least one of Claims 1 to 19, ***characterized in*** that there are provided lateral-force-absorbing elements (19a-19b-19c-19d) which are connected to the frame (1-3-4-5) by means of an articulation (17), and in that there are provided actuating elements (21-21a-21b-24a-24b-26) which serve to pivot the lateral-force-absorbing elements (19a-19b-19c-19d) around the axis of the articulation (17).

21. Reversible rotary plough according to Claim 20, ***characterized in*** that the actuating elements (21-21a-21b-24a-24b-26) are provided such that pivoting of the lateral-force-absorbing elements (19a-19b-19c-19d) takes place during pivoting of the second frame unit (5) with respect to the first frame unit (1-3).

22. Reversible rotary plough according to at least one of Claims 1 to 21, ***characterized in*** that, in the transport position, the second frame unit (5) and the rotor (6-7) which is borne by said second frame unit (5) extend at least approximately in the transport direction.

23. Reversible rotary plough according to Claim 22, ***characterized in*** that a transport wheel is provided.

24. Reversible rotary plough according to at least one of Claims 1 to 23, ***characterized in*** that provided on the front side of the first frame unit (1-3) are provided cranks (15a, 15b) which are each provided with a journal (1b) for the lower links (2) of the vehicle and are connected to the first frame unit (1-3), by means of an articulation which is provided with a horizontal axis extending at right angles to the direction of travel, in order to orient the plough around the X-axis, which extends in the direction of travel.

## Revendications

1. Charrue rotative réversible comprenant :
a) un rotor (6-7) muni d'outils de labour (7) et pouvant être entraîné, à partir d'une source motrice, autour de son axe longitudinal qui s'étend, au moins durant le travail, transversalement à la direction d'avance, et
b) un châssis (1-3-4-5) supportant le rotor (6-7) et s'appuyant sur le sol, au moins durant le travail, au moyen d'au moins une roue (13a, 13b, 19a, 19b, 39),
lequel châssis (1-3-4-5) est composé
(i) d'une première unité de châssis (1-3) au moyen de laquelle la charrue rotative réversible peut être couplée à un véhicule,
(ii) d'une deuxième unité de châssis (5) supportant le rotor (6-7) et liée à la première unité de châssis (1-3) au moyen d'une articulation (4), et
(iii) d'organes de transmission qui transmettent au rotor (6-7) la puissance reçue de la source motrice, lesdits organes de transmission comportant entre autres un carter d'entraînement (8),
***caractérisée en ce*** que
(i) l'articulation (4) liant la deuxième unité de châssis (5) à la première unité de châssis (1-3) est une articulation avec un axe au moins sensiblement vertical ;
(ii) les organes de transmission comportent un palier (30-30a-30b) implanté dans la zone de la partie frontale de la première unité de châssis (1-3), et une ligne d'arbres (8b) qui transmet la puissance à partir du palier (30-30a-30b) en direction du carter d'entraînement (8) et qui s'étend, sur au moins une partie de sa longueur, plus haut que la deuxième unité de châssis (5).

2. Charrue rotative réversible selon la revendication 1, ***caractérisée en ce*** que les organes de transmission (30-30a-30b-8-8a-8b-8c-6a-6b) comportent un carter d'entraînement (30-30a-30b) lié à la première unité de châssis (1-3).

3. Charrue rotative réversible selon la revendication 2, ***caractérisée en ce*** que le carter d'entraînement (30-30a-30b) lié à la première unité de châssis (1-3), constitue le palier (30-30a-30b) implanté dans la zone de la partie frontale de la première unité de châssis (1-3).

4. Charrue rotative réversible selon l'une au moins des revendications 1 à 3, ***caractérisée en ce*** ce que la ligne d'arbres (8b) s'étend, sur au moins une partie de sa longueur, au-dessus de la deuxième unité de châssis (5).

5. Charrue rotative réversible selon l'une au moins des revendications 1 à 4, ***caractérisée en ce*** que les organes de transmission sont, compte tenu de la direction d'avance, couplés à l'extrémité du rotor (6-7) la plus en arrière.

6. Charrue rotative réversible selon l'une au moins des revendications 1 à 5, ***caractérisée en ce*** que les organes de transmission (30-30a-30b-8-8a-8b-8c-6a-6b) comportent des organes (30) d'inversion du sens de rotation, à l'aide desquels le sens de rotation du rotor (6-7) peut être changé.

7. Charrue rotative réversible selon la revendication 6 et l'une au moins des revendications 2 ou 3, ***caractérisée en ce*** que les organes (30) d'inversion du sens de rotation sont prévus dans le carter d'entraînement (30-30a-30b) lié à la première unité de châssis (1-3).

8. Charrue rotative réversible selon la revendication 6 ou 7, ***caractérisée en ce*** que les organes (30) d'inversion du sens de rotation sont actionnés par une tringlerie de commande (9) lors du pivotement de la deuxième unité de châssis (5) par rapport à la première unité de châssis (1-3).

9. Charrue rotative réversible selon l'une au moins des revendications 1 à 8, ***caractérisée en ce*** que la deuxième unité de châssis présente, en vue de devant, la forme d'un U ouvert vers le bas.

10. Charrue rotative réversible selon l'une au moins des revendications 1 à 9, ***caractérisée en ce*** que l'articulation (4) liant la deuxième unité de châssis (5) et la première unité de châssis (1-3) est implantée, en vue de dessus, sensiblement dans la zone médiane de la deuxième unité de châssis (5).

11. Charrue rotative réversible selon l'une au moins des revendications 1 à 10, ***caractérisée en ce*** que l'articulation liant la deuxième unité de châssis (5) à la première unité de châssis (1-3), est constituée d'une couronne (4) prévue entre la première (1-3) et la deuxième unité de châssis (5).

12. Charrue rotative réversible selon la revendication 11, ***caractérisée en ce*** que au moins la première unité de châssis (1-3) et, le cas échéant, la deuxième unité de châssis (5) comportent, au moins dans la zone de la couronne (4), deux longerons (3a, 3a') auxquels la couronne (4) est fixée bilatéralement.

13. Charrue rotative réversible selon l'une au moins des revendications 1 à 12, ***caractérisée en ce*** qu'il est prévu des organes de commande (22, 22a, 22b, 28, 29) servant au pivotement de la deuxième unité de châssis (5) par rapport à la première unité de châssis (1-3) autour de l'axe de l'articulation (4).

14. Charrue rotative réversible selon la revendication 13, ***caractérisée en ce*** que les organes de commande comportent un vérin (28) lié d'une part à la première unité de châssis (1-3) et d'autre part à la deuxième unité de châssis (5).

15. Charrue rotative réversible selon l'une au moins des revendications 1 à 14, ***caractérisée en ce*** que la roue (les roues) (39) à l'aide de laquelle (desquelles) le châssis (1-3-4-5) s'appuie sur le sol au moins durant le travail, est (sont) liée(s) au châssis (1-3-4-5) au moyen d'une articulation (36) d'axe au moins sensiblement vertical, et qu'il est prévu des organes de commande (35-35a-35b-35c) servant au pivotement de la roue (des roues) (39) autour de l'axe de l'articulation (36).

16. Charrue rotative réversible selon la revendication 15, ***caractérisée en ce*** que les organes de commande (35-35a-35b-35c) sont prévus de telle sorte que le pivotement de la roue (des roues) (39) s'effectue pendant le pivotement de la deuxième unité de châssis (5) par rapport à la première unité de châssis (1-3).

17. Charrue rotative réversible selon l'une au moins des revendications 1 à 16, ***caractérisée en ce*** que la roue (les roues) (13a, 13b, 19a, 19b) à l'aide de laquelle (desquelles) le châssis s'appuie sur le sol au moins durant le travail, est (sont) liée(s) au châssis (1-3-4-5) au moyen d'une articulation d'axe au moins sensiblement horizontal, et que cette roue (ces roues) (13a, 13b, 19a, 19b) peut (peuvent) être pivotée(s) autour de l'axe de l'articulation à l'aide d'organes de commande (14-21-21a-21b-24a-24b-26).

18. Charrue rotative réversible selon la revendication 15, 16 ou 17, ***caractérisée en ce*** que la roue (les roues) (13a-13b-39) est (sont) liée(s) à la deuxième unité de châssis (5).

19. Charrue rotative réversible selon la revendication 17, ***caractérisée en ce*** que la roue (les roues) (19a-19b) est (sont) liée(s) à la première unité de châssis (1-3).

20. Charrue rotative réversible selon l'une au moins des revendications 1 à 19, ***caractérisée en ce*** qu'il est prévu des organes (19a-19b-19c-19d) d'absorption des efforts latéraux, qui sont liés au châssis (1-3-4-5) au moyen d'une articulation (17), et qu'il est prévu des organes de commande (21-21a-21b-24a-24b-26) servant au pivotement des organes (19a-19b-19c-19d) d'absorption des efforts latéraux autour de l'axe de l'articulation (17).

21. Charrue rotative réversible selon la revendication 20, ***caractérisée en ce*** que les organes de commande (21-21a-21b-24a-24b-26) sont prévus de telle sorte que le pivotement des organes (19a-19b-19c-19d) d'absorption des efforts latéraux s'effectue pendant le pivotement de la deuxième unité de châssis (5) par rapport à la première unité de châssis (1-3).

22. Charrue rotative réversible selon l'une au moins des revendications 1 à 21, ***caractérisée en ce*** que la deuxième unité de châssis (5) et le rotor (6-7) porté par cette deuxième unité de châssis (5), s'étendent, en position de transport, au moins sensiblement suivant la direction de transport.

23. Charrue rotative réversible selon la revendication 22, ***caractérisée en ce*** qu'il est prévu une roue de transport.

24. Charrue rotative réversible selon l'une au moins des revendications 1 à 23, ***caractérisée en ce*** que, à la partie frontale de la première unité de châssis (1-3), sont prévues des manivelles (15a, 15b) munies chacune d'un tenon (1b) pour les bras inférieurs (2) du véhicule, et liées à la première unité de châssis (1-3) au moyen d'une articulation d'axe horizontal et orthogonal à la direction d'avance, en vue de l'orientation de la charrue autour de l'axe X s'étendant suivant la direction d'avance.
